# EUROPÄISCHE PATENTSCHRIFT

(11) **EP 0 895 165 B1**
(45) Veröffentlichungstag und Bekanntmachung des Hinweises auf die Patenterteilung: **07.09.2005**
(21) Anmeldenummer: 98202507.4
(22) Anmeldetag: 27.07.1998
(51) Int. Cl.: G06F 13/32

(54) **Kommunikationssystem mit einer DMA-Einheit**
Communication system with a DMA controller
Système de communication avec un contrôleur DMA

(30) Priorität: 02.08.1997 DE 19733527
(43) Veröffentlichungstag der Anmeldung: 03.02.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Salbaum, Helmut, Dipl.-Ing., Röntgenstrasse 24, 22335 Hamburg (DE); Bauer, Harald, Dipl.-Ing., Röntgenstrasse 24, 22335 Hamburg (DE); Frühwald, Friedrich, Dipl.-Ing., Röntgenstrasse 24, 22335 Hamburg (DE)
(74) Vertreter: Volmer, Georg

(56) Entgegenhaltungen:
- US-A- 4 837 677
- US-A- 5 063 498
- US-A- 5 481 678

## Beschreibung

Die Erfindung betrifft ein Kommunikationssystem zum Austausch von Daten zwischen einem Bus und wenigstens einer gekoppelten Datenverarbeitungsanordnung über eine serielle Schnittstelle, die durch eine Steuerleitung über eine DMA-Einheit mit einem Mikroprozessor gekoppelt ist.

Weiterhin betrifft die Erfindung noch eine DMA-Einheit für sowie ein Mobilfunkgerät und ein Datenverarbeitungsgerät (z.B. einen Personal Computer) mit einem solchen Kommunikationssystem.

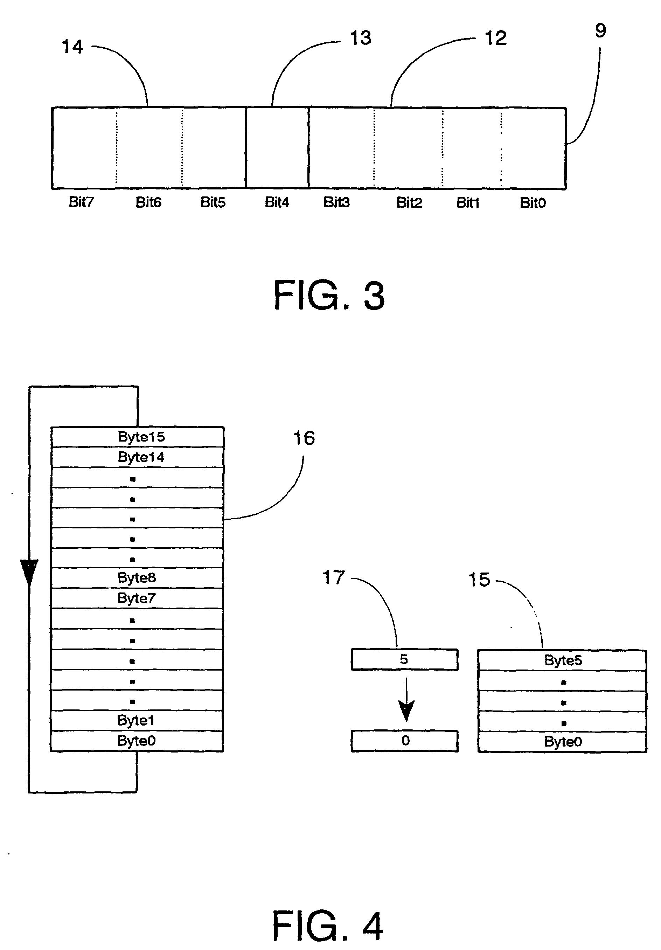

Aus EP 0 422 776 ist ein Kommunikationssystem für seriellen Datenaustausch bekannt, das aus einem Mikroprozessor, einem Speicher, einer DMA-Einheit (Direct Memory Access Control Unit, DMAC) und einer seriellen Schnittstelle (Serial Communication Control, SCC) besteht. Diese Funktionsblöcke sind gemäß Figur 3 über einen Datenbus miteinander verbunden (Spalte 4, Zeile 6-26). In der Figur 3 mit zugehöriger Beschreibung (Spalte 8, Zeile 41 bis Spalte 9, Zeile 12) wird beschrieben, wie die Daten (Communication Line 318) von der Schnittstelle (SCC) empfangen werden. Danach werden unter Kontrolle der DMAC die Adressinformation und der Nachrichteninhalt der Datenpakete über den Datenbus (310) an einen festgelegten Speicherplatz im Speicher eingeschrieben. In dieser Phase liefert die Schnittstelle (SCC) keine Steuersignale an den Mikroprozessor oder die DMA-Einheit (DMAC). Die DMA-Einheit (DMAC) steuert die Übertragung der Datenpakete von der Schnittstelle (SCC) in den Speicher, ohne eine Kontrolle des Vorgangs und damit eine Möglichkeit auf Abweichungen vom normalen Vorgang zu reagieren (Spalte 8, Zeile 41-47). Die DMAC liefert lediglich am Ende eines Datenpaketes ein HOLD-Signal an den Mikroprozessor, um Kontrolle über den Datenbus anzufordern, sobald die SCC über eine Leitung (Request Line 330) eine Anforderung anmeldet (Spalte 8, Zeile 51-57).

Da das angegebene Kommunikationssystem keine Steuerleitung von der Schnittstelle zum Mikroprozessor aufweist, kann die serielle Schnittstelle nicht im herkömmlichen Interrupt-Modus betrieben werden. Dadurch muß der Datenaustausch immer im DMA-Modus stattfinden, in dem die DMA-Einheit die Übertragungin den Speicher steuert. Weiterhin kann ohne Steuersignale von der Schnittstelle keine genaue Kontrolle des Datenaustausches (Empfang/Senden und Speicherung) vorgenommen werden, so daß insbesondere bei einer Abweichung vom fehlerfreien Vorgang ein erheblicher Software-Aufwand für Korrekturmaßnahmen notwendig ist. In einem Interrupt-Mode meldet die Schnittstelle durch ein Interrupt-Signal direkt beim Mikroprozessor einen Datenaustausch an. Diese herkömmliche Art der Steuerung des Datenaustausches bedingt jedoch eine sehr starke Belastung des Mikroprozessors und des Datenbusses, der dadurch wesentlich weniger Kapazitäten für andere Aufgaben (z.B. die Steuerung weiterer Schnittstellen) zur Verfügung stellen kann. Dennoch ist dieser Modus bei bestimmten Daten (z.B. beim Austausch von geringen Datenmengen wie Kontrolldaten) effizienter als der DMA-Modus, in dem die unmittelbare Kontrolle während der Speicherung fehlt.

Aus US 5,481,678 ist ein Datenprozessor bekannt, bei dem Daten über einen Bus zu einem Speicher übertragen werden. Dazu sind eine DMA Steuereinheit, eine Interrupt-Steuereinheit, eine Auswählschaltung und eine Steuereinheit für eine serielle Kommunikation vorgesehen. Diese Steuereinheit für eine serielle Kommunikation umfasst ein Auswähleinstellregister. Dieses Auswähleinstellregister gibt auf zwei Modusleitungen einen Moduscode an die Auswählschaltung weiter. Die Auswählschaltung empfängt auf vier Leitungen Interruptbefehlssignale und DMA Befehlssignale.

Die Aufgabe der Erfindung ist es daher, ein Kommunikationssystem zu schaffen, das einen effizienten Datenaustausch zwischen einem Bus und einer seriellen Schnittstelle mittels einer DMA-Einheit bei geringer Belastung des steuernden Mikroprozessors gewährleistet.

Diese Aufgabe wird bei einem Kommunikationssystem dadurch gelöst, daß die Schnittstelle mittels einer Steuerleitung über eine DMA-Einheit mit einem Mikroprozessor gekoppelt ist und die DMA-Einheit in einen, einen Interrupt-Modus kennzeichnenden, inaktiven Zustand und einen, einen DMA-Modus kennzeichnenden, aktiven Zustand schaltbar ist, wobei die DMA-Einheit im inaktiven Zustand zur unveränderten Weiterleitung eines Schnittstellen-Steuersignals auf der Steuerleitung an den Mikroprozessor vorgesehen ist und im aktiven Zustand zur Bildung wenigstens eines DMA-Steuersignals aus dem Schnittstellen-Steuersignal und zur Lieferung der gebildeten DMA-Steuersignale auf der Steuerleitung an den Mikroprozessor vorgesehen ist.

Um eine serielle Schnittstelle sowohl im Interrupt-Modus als auch im DMA-Modus für einen Datenaustausch verwenden zu können, wird die Steuerleitung, durch die die Schnittstelle mit dem steuernden Mikroprozessor verbunden ist, durch die DMA-Einheit durchgeschleift. Wenn über die Schnittstelle eine große Menge an Daten übertragen werden soll, dann erkennt das Kommunikationssystem dies und kann, beispielsweise softwaregesteuert durch den Mikroprozessor, die DMA-Einheit aktivieren. Dann wird die DMA-Einheit in die Steuerleitung eingeschaltet und verändert die Schnittstellensteuersignale. Die im Interrupt-Modus direkt weitergeleiteten Steuersignale werden interpretiert und DMA-Steuersignalen zugeordnet, die dann statt dessen an den Mikroprozessor geliefert werden. Diese Zuordnung kann durch ein Schaltwerk oder einen adressierbaren Speicher einfach realisiert werden, und kann dadurch an unterschiedliche Erfordernisse angepaßt werden.

Bei einer bevorzugten Ausführungsform ist im Mikroprozessor eine Auswerteeinheit mit der Steuerleitung der Schnittstelle gekoppelt, und zur Ausgabe eines der Steuerleitung zugeordneten Interrupt-Vektors an den Mikroprozessor vorgesehen. Im Mikroprozessor werden die verschiedenen Steuersignale (z.B. I/O-Requests von mehreren Schnittstellen sowie weiteren Komponenten des Kommunikationssystems) von einer Interrupt-Control-Unit (ICU) ausgewertet. Die Auswerteeinheit (ICU) liefert für jede Steuerleitung einen Interrupt-Vektor, der durch ein Steuersignal (Interrupt) auf dieser Steuerleitung angesprochen wird. Der Interrupt-Vektor zeigt auf eine zugehörige Interrupt-Routine, die der Mikroprozessor dann startet.

In einer vorteilhaften Weiterbildung ist die DMA-Einheit im aktiven Zustand zur Bildung eines DMA-Modus-Interrupt-Vektors und zur Zuordnung des DMA-Modus-Interrupt-Vektors zur Steuerleitung der Schnittstelle in der Auswerteeinheit vorgesehen. Neben der Auswertung des Steuersignals von der Schnittstelle erzeugt die DMA-Einheit auch noch einen DMA-Modus-Interrupt-Vektor, der im DMA-Modus statt des normalen Interrupt-Vektors verwendet wird. Da erfindungsgemäß eine Steuerleitung für zwei verschiedene Interruptquellen (Schnittstelle im Interrupt-Modus und DMA-Einheit im DMA-Modus) benutzt wird, soll zur Unterscheidung der der Steuerleitung zugeordnete Interrupt-Vektor veränderbar sein. Auf diese Weise zeigt der DMA-Modus-Interrupt-Vektor auf eine andere Interrupt-Routine, die bei einem DMA-Steuersignal (DMA-Interrupt) gestartet wird. Damit können die DMA-Steuersignale (z.B. Füllstände von Zwischenspeichern in der DMA-Einheit, Übertragungsfehler, Datenübertragung beendet) geeignete Interrupt-Routinen auslösen.

In einer Weiterbildung der Erfindung ist die DMA-Einheit im aktiven Zustand zum Setzen eines DMA-Bits im Interrupt-Vektor und im inaktiven Zustand zum Rücksetzen des DMA-Bits im Interrupt-Vektor vorgesehen. Die Bildung eines DMA-Modus-Interrupt-Vektors kann auf überraschend einfache Weise durch Veränderung eines Bits im Interrupt-Vektor realisiert werden. Durch Setzen des DMA-Bits (Wert '1') bleibt physikalisch der gleiche Vektor der Steuerleitung zugeordnet, wobei jedoch der Inhalt so eindeutig modifiziert ist, daß der umgestaltete Vektor auf eine neue Interrupt-Routine zeigt. Wenn das DMA-Bit von der DMA-Einheit rückgesetzt (Wert '0') wird, liegt wieder der normale Interrupt-Vektor vor.

Besonders vorteilhaft ist es, in der DMA-Einheit einen linearen Zwischenspeicher und einen Endloszwischenspeicher im aktiven Zustand zur Zwischenspeicherung der auszutauschenden Daten vorzusehen. Von der DMA-Einheit werden zwei Speicherverfahren zur Verfügung gestellt, um Daten zwischenzuspeichern, die von oder zur Schnittstelle übertragen werden sollen. Im linearen Zwischenspeicher werden insbesondere kleinere Datenmengen (z.B. kurze Meldungen) zwischengespeichert, weil hier die Daten linear an Speicherplätzen abgelegt werden. Im Gegensatz dazu ist der Endloszwischenspeicher ringförmig organisiert, d.h., bei Erreichen der oberen Grenze des Endloszwischenspeichers wird die Speicheradresse wieder auf ihren Anfangswert gesetzt. Daraus sich ein Zwischenspeicher mit einstellbarer Größe ergibt. Damit ein Überlauf bzw. ein Leerlauf vermieden wird, erhält der Mikroprozessor DMA-Steuersignale über die Füllstände. Dieser Endloszwischenspeicher eignet sich besonders für große Datenmengen, die beispielsweise auftreten können, wenn Grafikdaten zum Aufbau eines Displays übertragen werden.

Bei einer vorteilhaften Weiterbildung der Erfindung wird der Datenaustausch dadurch optimiert, daß bei Zwischenspeicherung von Daten im Endloszwischenspeicher bei Erreichen eines halbvollen Füllstandes und eines vollen Füllstandes des Endloszwischenspeichers jeweils ein den Füllstand kennzeichnendes DMA-Steuersignal an den Mikroprozessor weitergeleitet wird, daß in ein Zählregister des linearen Zwischenspeichers die Anzahl der nach dem jeweils folgenden Füllstand noch auszutauschenden Daten eingetragen wird und daß bei Erreichen des folgenden Füllstandes diese Anzahl von Daten im linearen Zwischenspeicher gespeichert wird. Auf diese Weise können große Datenmengen zwischengespeichert werden, ohne den Mikroprozessor zu belasten. Bei herkömmlicher Zwischenspeicherung muß der Mikroprozessor die Speicheradresse des Endloszwischenspeichers ständig abfragen, um den Speichervorgang gezielt stoppen zu können, da lediglich der halbvolle und der volle Füllstand durch Steuersignale mitgeteilt wird. Mit dem angegebenen Verfahren kann die DMA-Einheit die Zwischenspeicherung selbstständig überwachen. Wenn eine Datenmenge (z.B. 18 Byte), die nicht genau den halbvollen (z.B. 8 Byte) oder vollen (z.B. 16 Byte) Füllstand des Endloszwischenspeichers erreicht, zwischengespeichert werden soll, wird die Anzahl der Datenmenge, die über den nächsten Füllstand hinausgeht (im Beispiel 2 Byte), in das Zählregister des linearen Zwischenspeichers eingetragen. Zunächst wird dabei der Endloszwischenspeicher so weit wie möglich ausgenutzt. Die DMA-Einheit veranlaßt dann bei Erreichen des nächsten Füllstandes (hier 'voll'), daß die im Zählregister eingetragene Anzahl von Daten im linearen Zwischenspeicher abgelegt wird, wobei das Zählregister pro Byte um 1 dekrementiert wird. Der Mikroprozessor wird lediglich durch ein DMA-Steuersignal (DMA-Interrupt) am Ende des Datenaustausches (Zählregister=0) belastet.

Im folgenden soll ein bevorzugtes Ausführungsbeispiel der Erfindung dargestellt werden, in dem ein erfindungsgemäßes Kommunikationssystem besonders vorteilhaft realisiert ist. Dabei zeigen
- Figur 1:: ein Blockdiagramm des Kommunikationssystems,
- Figur 2:: ein detailliertes Blockdiagramm zum Vorgang des Datenaustausches mit einer erfindungsgemäßen DMA-Einheit,
- Figur 3:: den bitweisen Aufbau eines Interrupt-Vektors für einen Mikroprozessor und
- Figur 4:: den Aufbau des in der DMA-Einheit enthaltenen Zwischenspeichers.

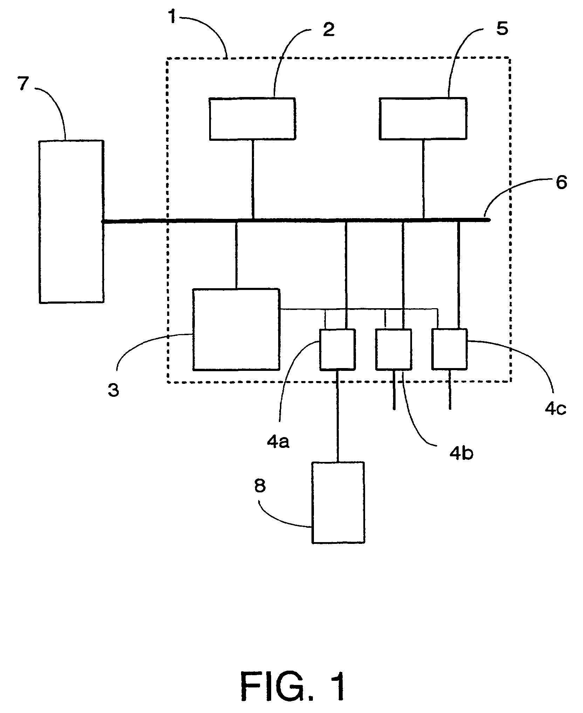

Das Kommunikationssystem 1 in Figur 1 besteht aus einem Mikroprozessor 2, einer DMA-Einheit 3, mehreren seriellen Schnittstellen 4a, 4b und 4c sowie einem Buscontroller 5, die alle mit einem Bus 6 verbunden sind. Der ebenfalls mit dem Bus 6 gekoppelte Speicher 7 ist in dem Ausführungsbeispiel außerhalb des Kommunikationssystems 1 angeordnet. Die Schnittstellen 4a-4c sind noch durch eine Steuerleitung mit der DMA-Einheit 3 verbunden. Weiterhin ist mit der Schnittstelle 4a eine Datenverarbeitungsanordnung 8 außerhalb des Kommunikationssystems 1 verbunden, mit der der Datenaustausch durchgeführt werden wird. Dies soll im Beispiel eine Standard-Speichersteckkarte im PCMCIA-Format sein, die auch für PC-Anwendungen verwendet werden. Das Kommunikationssystem 1 ist vorteilhafterweise in einem Chip integriert.

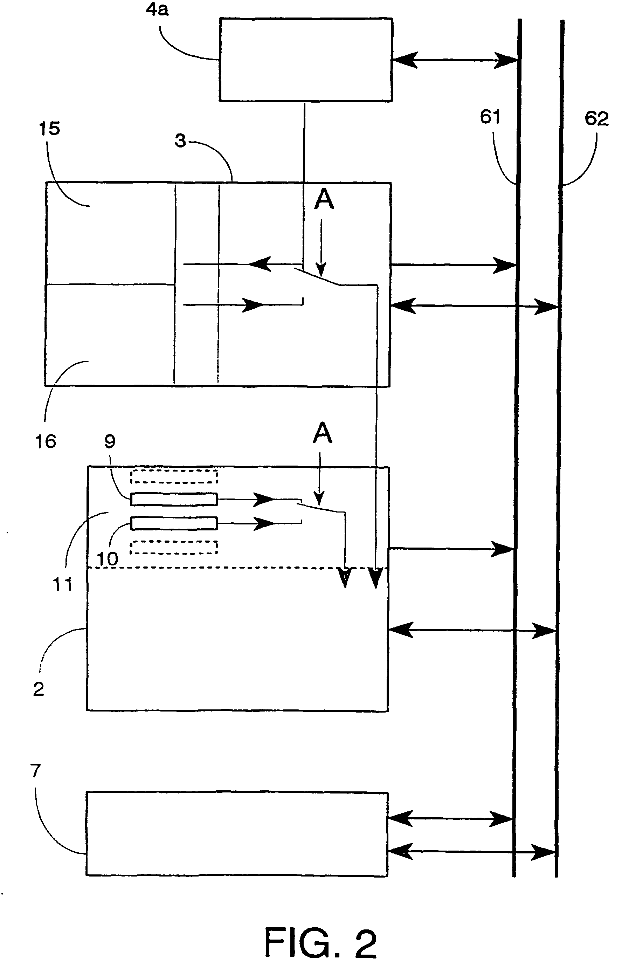

Zur Beschreibung des Datenaustausches mit der erfindungsgemäßen DMA-Einheit 3 sind in der Figur 2 die beteiligten Funktionsblöcke detaillierter dargestellt. Der Bus 6 besteht aus einem Datenbus 61 und einem Adressbus 62. Mit dem Datenbus 61 und dem Adressbus 62 ist die DMA-Einheit 3, der Mikroprozessor 2 und der Speicher 7 verbunden. Außerdem ist auch die serielle Schnittstelle 4a mit dem Datenbus 61 gekoppelt. In einer dem Mikroprozessor 2 zugeordneten Auswerteeinheit 11 (Interrupt Control Unit, ICU) sind mehrere Interrupt-Vektoren enthalten, von denen ein Interrupt-Vektor 9 und ein zugeordneter DMA-Modus-Interrupt-Vektor 10 dargestellt sind. Weiterhin ist die Steuerleitung zu sehen, mit der die Schnittstelle 4a über die DMA-Einheit 3 mit dem Mikroprozessor 2 verbunden ist. Die DMA-Einheit 3 stellt einen linearen Zwischenspeicher 15 (linear buffer) und einen Endloszwischenspeicher 16 (ring buffer) zur Verfügung.

In der Figur 3 ist der Aufbau eines Interrupt-Vektors 9 genauer dargestellt. Allgemein besteht ein Interrupt-Vektor 9 aus drei Feldern mit insgesamt 8 Bits, von denen die ersten vier Bits 12, ausgehend vom Bit0 (LSB), die Interruptquelle kennzeichnen. Das folgende Bit4 ist das DMA-Bit 13, und mit den Bit5 - Bit7 (MSB) wird eine Basisadresse 14 beschrieben. Die Basisadresse 14 wird durch ein nicht dargestelltes Register in der Auswerteeinheit 11 bestimmt und ist für alle Interruptquellen gleich. Die Basisadresse 14 ermöglicht die Verwendung von mehreren Vektortabellen, in denen jeweils die Interrupt-Vektoren 9 für alle Interruptquellen enthalten sind. Dadurch sind verschiedene Interrupt-Routinen möglich, die an die jeweils verwendete Software angepaßt sind, die dann auch in das zugehörige Register einen Wert für die Vektortabelle einschreibt. Der Interrupt-Vektor 9 wird im Kern des Mikroprozessors 2 jeweils mit 4 multipliziert und der erhaltene Wert als Startadresse für die der Interruptquelle zugeordneten Interrupt-Routine verwendet. Um eindeutige Startadressen zu erhalten, muß daher die Basisadresse 14 so gewählt werden, daß die Interrupt-Vektoren 9 von 0 bis 64 (2⁴ x 4) nicht betroffen werden.

Das DMA-Bit 13 wird von der DMA-Einheit 3 gesetzt. Wenn eine Schnittstelle oder eine andere Interruptquelle nicht im DMA-Modus betrieben werden kann oder soll, ist das DMA-Bit 13 in dem zugeordneten Interrupt-Vektor 9 nicht gesetzt. Dann wird bei einer entsprechenden Anforderung der Interruptquelle (Steuersignal) die normale Interrupt-Routine ausgelöst. Für Interruptquellen, die im DMA-Modus betrieben werden können, unterscheidet das DMA-Bit 13 zwischen der normalen Interrupt-Routine und einer DMA-Modus-Interrupt-Routine.

Wenn der Datenaustausch im Interrupt-Modus stattfinden soll, meldet die Schnittstelle 4a über eine Steuerleitung eine entsprechende Anforderung (Interrupt) an den Mikroprozessor 2. Die Steuerleitung wird durch die DMA-Einheit 3, die sich im inaktiven Zustand befindet, durchgeschleift und das Schnittstellen-Steuersignal mit der Anforderung nicht verändert. Das Steuersignal wird von der Auswerteeinheit 11 (ICU) empfangen und ausgewertet, in dem der der Interruptquelle zugeordnete Interrupt-Vektor 9 in den Kern des Mikroprozessors 2 übertragen wird. dadurch wird die Interrupt-Routine gestartet, die einen Datenaustausch über die Schnittstelle 4a im Interrupt-Modus steuert.

Wenn beispielsweise aufgrund der Art der auszutauschenden Daten der DMA-Modus angezeigt ist, dann wird die DMA-Einheit 3 mittels eines Aktivierungssignals A vom Mikroprozessor 2 in einen, den DMA-Modus kennzeichnenden, aktiven Zustand versetzt. Die Steuersignale der Schnittstelle 4a werden dann nicht mehr direkt an den Mikroprozessor 2 weitergeleitet, sondern in der DMA-Einheit 3 als Datenaustauschaufforderungen ausgewertet. Die 'freie' Steuerleitung wird zur Übertragung von DMA-Steuersignalen verwendet. Außerdem wird im aktiven Zustand der von der DMA-Einheit 3 bereitgestellte Zwischenspeicher 15 und 16 für den Datenaustausch im DMA-Modus verwendet. Der Aufbau der Zwischenspeicher 15 und 16 in der DMA-Einheit 3 ist in Figur 4 dargestellt. Damit können sowohl meldungsorientierte als auch transparente Daten optimal mittels der DMA-Einheit 3 übertragen werden. Bei meldungsbezogenen Daten können von oder zu der Schnittstelle 4a fünf zu übertragene Bytes im linearen Zwischenspeicher 15 (linear buffer) zwischengespeichert werden. Ein zugeordnetes Zählregister 17 wird für jedes eingelesene Byte um 1 dekrementiert und meldet beim Erreichen der 'Null' dem Mikroprozessor 2, das der Zwischenspeicher 15 voll ist. Der Austausch wird automatisch bei Erreichen der eingestellten Anzahl der zu übertragenden Bytes gestoppt und dem Mikroprozessor 2 ebenfalls mittels eines DMA-Steuersignals mitgeteilt. Zu übertragende transparente Daten werden im Endloszwischenspeicher (ring buffer) 16 mit wählbarer Größe zwischengespeichert. Beim Erreichen der Speichergrenze wird die Speicheradresse wieder auf ihren Anfangswert gesetzt. Zur Vermeidung eines Überlaufes des Endloszwischenspeichers 16 werden dem Mikroprozessor 2 die Füllstände "Halbvoll" und "Voll" mittels DMA-Steuersignal mitgeteilt.

Um das softwaregesteuert aufwendige exakte Stoppen des Endloszwischenspeichers 16 durch den Mikroprozessor 2 zu vereinfachen, übernimmt die DMA-Einheit 3 die Synchronisation. Um die Speicherung im Endloszwischenspeicher 16 außerhalb der Füllstände "Halbvoll" oder "Voll" gezielt zu stoppen, muß der Mikroprozessor 2 in der Regel ständig die Speicheradresse des Endloszwischenspeichers 16 abfragen, was zu einer großen Belastung des Mikroprozessors 2 und des Bus 6 führt. Die erfindungsgemäße DMA-Einheit 3 reduziert die Belastung erheblich durch eine Kombination des linearen Zwischenspeichers 15 und des Endloszwischenspeichers 16. Sobald während der Speicherung im Endloszwischenspeicher 16 das Zählregister 17 mit der Anzahl der nach Erreichen des nächsten Füllstandes ("Halbvoll" oder "Voll") noch zu übertragenden Daten beschrieben wird, schaltet die DMA-Einheit 3 beim Erreichen dieses nächsten Füllstandes auf den linearen Zwischenspeicher 15 um. Die Belastung für den Mikroprozessor 2 wird auf einen DMA-Modus-Interrupt (Zählregister=0) am Ende des Datenaustausches reduziert.

Die DMA-Einheit 3 reduziert den Aufwand zur Synchronisierung des Mikroprozessors 2 mit der Schnittstelle 4a durch Auswertung der Steuersignale auch in folgenden drei Fällen. Beim Start eines Datenaustausches wird eine Belastung des Mikroprozessors 2 so lange vermieden, bis eine Starterkennung in der DMA-Einheit 3 die Übertragung des ersten Datenwortes erkennt und dies dem Mikroprozessor 2 per DMA-Modus-Interrupt mitgeteilt wird. Wenn während des Datenaustausches ein Fehler auftritt, werden alle Zähler und Zeiger (z.B. auf die aktuelle Adresse im Zwischenspeicher 16) auf ihrem Wert eingefroren. Dadurch ist eine sehr einfache Fehlerbehandlung bei einem erneuten Versuch eines Datenaustausches möglich.

Auf diese Weise wird im DMA-Modus der Mikroprozessor 2 entlastet, da sie nicht mehr auf jedes Steuersignal (Interrupt) von der Schnittstelle 4a reagieren muß, sondern die Steuerung des Datenaustausches weitgehend von der DMA-Einheit 3 übernommen wird. Da jetzt für zwei Interruptquellen (Schnittstelle 4a im Interrupt-Modus und im DMA-Modus) die selbe Steuerleitung verwendet wird, muß der zugehörige Interrupt-Vektor 9 in der Auswerteeinheit 11 des Mikroprozessors 2 wie oben beschrieben mit einem Offset versehen werden. Daher wird mit dem Aktivierungssignal A auch das Setzen des DMA-Bits 13 durch die DMA-Einheit 3 veranlaßt. So werden je nach Modus bei einem Interrupt zwei unterschiedliche Interrupt-Routinen angesprungen.

## Patentansprüche

1. Kommunikationssystem (1) zum Austausch von Daten zwischen einem Bus (6) und wenigstens einer gekoppelten Datenverarbeitungsanordnung (8) über eine serielle Schnittstelle (4a-c) mit einer DMA-Einheit (3) und mit einem Mikroprozessor (2),
**dadurch gekennzeichnet,**
**daß** die Schnittstelle (4a-c) mittels einer Steuerleitung über eine DMA-Einheit (3) mit einem Mikroprozessor (2) gekoppelt ist und die DMA-Einheit (3) in einen, einen Interrupt-Modus kennzeichnenden, inaktiven Zustand und einen, einen DMA-Modus kennzeichnenden, aktiven Zustand schaltbar ist, wobei die DMA-Einheit (3) im inaktiven Zustand zur unveränderten Weiterleitung eines Schnittstellen-Steuersignals auf der Steuerleitung an den Mikroprozessor (2) vorgesehen ist und im aktiven Zustand zur Bildung wenigstens eines DMA-Steuersignals aus dem Schnittstellen-Steuersignal und zur Lieferung der gebildeten DMA-Steuersignale auf der Steuerleitung an den Mikroprozessor (2) vorgesehen ist.

2. Kommunikationssystem (1) nach Anspruch 1,
**dadurch gekennzeichnet,**
**daß** im Mikroprozessor (2) eine Auswerteeinheit (11) mit der Steuerleitung der Schnittstelle (4a) gekoppelt ist, und zur Ausgabe eines der Steuerleitung zugeordneten Interrupt-Vektors (9) an den Mikroprozessor (2) vorgesehen ist.

3. Kommunikationssystem (1) nach Anspruch 2,
**dadurch gekennzeichnet,**
**daß** die DMA-Einheit (3) im aktiven Zustand zur Bildung eines DMA-Modus-Interrupt-Vektors (10) und zur Zuordnung des DMA-Modus-Interrupt-Vektors (10) zur Steuerleitung der Schnittstelle (4a) in der Auswerteeinheit (11) vorgesehen ist.

4. Kommunikationssystem (1) nach Anspruch 3,
**dadurch gekennzeichnet,**
**daß** die DMA-Einheit (3) im aktiven Zustand zum Setzen eines DMA-Bits (13) im Interrupt-Vektor (9) und im inaktiven Zustand zum Rücksetzen des DMA-Bits (13) im Interrupt-Vektor (9) vorgesehen ist.

5. Kommunikationssystem (1) nach Anspruch 1,
**dadurch gekennzeichnet,**
**daß** in der DMA-Einheit (3) ein linearer Zwischenspeicher (15) und ein Endloszwischenspeicher (16) im aktiven Zustand zur Zwischenspeicherung der auszutauschenden Daten vorgesehen ist.

6. Kommunikationssystem (1) nach Anspruch 5,
**dadurch gekennzeichnet,**
**daß** bei Zwischenspeicherung von Daten im linearen Zwischenspeicher (15) am Ende des Datenaustausches ein das Ende des Austauschvorgangs kennzeichnendes DMA-Steuersignal an den Mikroprozessor (2) weitergeleitet wird.

7. Kommunikationssystem (1) nach Anspruch 6,
**dadurch gekennzeichnet,**
- **daß** bei Zwischenspeicherung von Daten im Endloszwischenspeicher (16) bei Erreichen eines halbvollen Füllstandes und eines vollen Füllstandes des Endloszwischenspeichers (16) jeweils ein den Füllstand kennzeichnendes DMA-Steuersignal an den Mikroprozessor (2) weitergeleitet wird,
- **daß** in ein Zählregister (17) des linearen Zwischenspeichers (15) die Anzahl der nach dem jeweils folgenden Füllstand noch auszutauschenden Daten eingetragen wird und
- **daß** bei Erreichen des folgenden Füllstandes diese Anzahl von Daten im linearen Zwischenspeicher (15) gespeichert wird.

8. Kommunikationssystem (1) nach Anspruch 1,
**dadurch gekennzeichnet,**
**daß** in der DMA-Einheit (3) im aktiven Zustand eine Starterkennung zur Erkennung der ersten auszutauschenden Daten vorgesehen ist, und daß die DMA-Einheit (3) bei Erkennung der ersten auszutauschenden Daten zur Lieferung eines, den Start eines Datenaustausches kennzeichnenden, DMA-Steuersignals vorgesehen ist.

9. Kommunikationssystem (1) nach Anspruch 1,
**dadurch gekennzeichnet**,
der Bus (6) mit einem Speicher (7) zum Austausch von Daten zwischen der Datenverarbeitungsanordnung (8) und dem Speicher (7) gekoppelt ist.

10. Mobilfunkgerät mit einem Kommunikationssystem (1) nach einem der Ansprüche 1 bis 9.

11. Datenverarbeitungsgerät mit einem Kommunikationssystem (1) nach einem der Ansprüche 1 bis 9.

## Claims

1. A communication system (1) for exchanging data between a bus (6) and at least one coupled data processing arrangement (8) via a serial interface (4a-c), to a DMA unit (3) and to a microprocessor (2), **characterized in that** the interface (4a-c) is coupled by means of a control line to a microprocessor (2) via a DMA unit (3) and the DMA unit (3) can be switched to an inactive state featuring an interrupt mode and an active state featuring a DMA mode, wherein the DMA unit (3) in the inactive state is provided for unchanged transfer of an interface control signal on the control line to the microprocessor (2) and in an active state for the formation of at least one DMA control signal from the interface control signal and for the supply of the formed DMA control signals over the control line to the microprocessor (2).

2. A communication system (1) as claimed in claim 1, **characterized in that** an evaluation unit (11) in the microprocessor (2) is coupled to the control line of the interface (4a) and provided for transferring to the microprocessor (2) an interrupt vector (9) assigned to the control line.

3. A communication system (1) as claimed in claim 2, **characterized in that** the DMA unit (3) in the active state is provided for forming a DMA mode interrupt vector (10) and for assigning the DMA mode interrupt vector (10) to the control line of the interface (4a) in the evaluation unit (11).

4. A communication system (1) as claimed in claim 3, **characterized in that** the DMA unit (3) in the active state is provided for setting a DMA bit (13) in the interrupt vector (9) and in the inactive state for resetting the DMA bit (13) in the interrupt vector (9).

5. A communication system (1) as claimed in claim 1, **characterized in that** in the DMA unit (3) a linear buffer (15) and a ring buffer (16) in the active state are provided for buffering the data to be exchanged.

6. A communication system (1) as claimed in claim 5, **characterized in that** when data are buffered in the linear buffer (15) a DMA control signal featuring the end of the exchange operation is transferred to the microprocessor (2) at the end of the data exchange.

7. A communication system (1) as claimed in claim 6, **characterized in that**
- when data are buffered in the ring buffer (16) a respective DMA control signal featuring the occupancy level is transferred to the microprocessor (2) when a half-full occupancy level and a full occupancy level of the ring buffer (16) is reached,
- **in that** the number of the data still to be exchanged after each next occupancy level is written in a counter register (17) of the linear buffer (15), and
- **in that** this number of data is stored in the linear buffer (15) when the next occupancy level is reached.

8. A communication system (1) as claimed in claim 1, **characterized in that** a start recognition for recognizing the first data to be exchanged is provided in the DMA unit (3) in the active state and **in that** when the first data to be exchanged are recognized, the DMA unit (3) is provided for producing a DMA control signal featuring the start of a data exchange.

9. A communication system as claimed in claim 1, **characterized in that** the bus (6) is coupled to a memory (7) for the exchange of data between the data processing arrangement (8) and the memory (7).

10. A mobile radio comprising a communication system (1) as claimed in any one of the claims 1 to 9.

11. A data processing unit comprising a communication system (1) as claimed in any one of the claims 1 to 9.

## Revendications

1. Système de communication (1) en vue de l'échange de données entre un bus (6) et au moins un dispositif de traitement de données (8) couplé par l'intermédiaire d'une interface série (4a-c) avec un collecteur DMA (3) et avec un microprocesseur (2),
**caractérisé en ce**
**que** l'interface (4a-c) est couplée à l'aide d'une ligne de commande par l'intermédiaire d'une unité DMA (3) avec un microprocesseur (2) et le collecteur DMA (3) peut être commuté dans un état inactif caractérisant le mode d'interruption et un état actif caractérisant le mode DMA, le collecteur DMA (3) étant prévu dans l'état inactif pour la transmission inchangée d'un signal de commande d'interface sur la ligne de commande au microprocesseur (2) et dans l'état actif pour la formation d'au moins un signal de commande DMA à partir du signal de commande d'interface et pour la délivrance des signaux de commande DMA formés sur la ligne de commande au microprocesseur (2).

2. Système de communication (1) selon la revendication 1,
**caractérisé en ce**
**qu'**une unité d'évaluation (11) est couplée avec la ligne de commande de l'interface (4a) dans le microprocesseur (2) et est prévue pour la sortie d'un vecteur d'interruption (9) affecté à la ligne de commande au microprocesseur (2).

3. Système de communication (1) selon la revendication 2,
**caractérisé en ce**
**que** le collecteur DMA (3) est prévu à l'état actif pour la formation d'un vecteur d'interruption de mode DMA (10) et pour l'affectation du vecteur d'interruption du mode DMA (10) pour la ligne de commande de l'interface (4a) dans l'unité d'évaluation (11).

4. Système de communication (1) selon la revendication 3,
**caractérisé en ce**
**que** l'unité DMA (3) est prévue dans l'état actif pour le placement d'un bit DMA (13) dans le vecteur d'interruption (9) et dans l'état inactif pour la réinitialisation du bit DMA (13) dans le vecteur d'interruption (9).

5. Système de communication (1) selon la revendication 1,
**caractérisé en ce**
**qu'**il est prévu une mémoire intermédiaire linéaire (15) et une mémoire intermédiaire sans fin (16) à l'état actif dans le contrôleur DMA (3) pour l'enregistrement intermédiaire des données à échanger.

6. Système de communication (1) selon la revendication 5,
**caractérisé en ce**
**qu'**en cas d'enregistrement intermédiaire de données dans la mémoire intermédiaire linéaire (15), un signal de commande DMA caractérisant la fin du processus d'échange est transmis au microprocesseur (2) à la fin du processus d'échange.

7. Système de communication (1) selon la revendication (6),
**caractérisé en ce**
- **qu'**un signal de commande DMA caractérisant le niveau de remplissage est transmis respectivement au microprocesseur (2) en cas d'enregistrement intermédiaire de données dans la mémoire intermédiaire sans fin (16) lorsqu'un niveau de remplissage à moitié plein et un niveau de remplissage plein de la mémoire intermédiaire sans fin (16) sont respectivement atteints;
- **que** le nombre de données à échanger encore après l'état de remplissage suivant respectif est introduit dans le registre de comptage (17) de la mémoire intermédiaire linéaire (15) et
- **que** ce nombre de données est enregistré dans la mémoire intermédiaire (15) linéaire lorsque le niveau de remplissage suivant est atteint.

8. Système de communication (1) selon la revendication 1,
**caractérisé en ce**
**que**, dans le collecteur DMA (3) à l'état actif, il est prévu une reconnaissance initiale pour la reconnaissance des premières données à échanger et que le collecteur DMA (3) est prévu en cas de reconnaissance des premières données à échanger pour la délivrance d'un signal de commande DMA caractérisant le début d'un échange de données.

9. Système de communication (1) selon la revendication 1,
**caractérisé en ce**
**que** le bus (6) est couplé à une mémoire (7) pour l'échange de données entre le dispositif de traitement de données (8) et la mémoire (7).

10. Radiotéléphone mobile avec un système de communication (1) selon l'une des revendications 1 à 9.

11. Appareil de traitement de données avec un système de communication (1) selon l'une des revendications 1 à 9.
